# EUROPEAN PATENT APPLICATION

(11) **EP 3 351 579 A1**
(43) Date of publication of application: **25.07.2018**
(21) Application number: 16846491.5
(22) Date of filing: 14.09.2016
(51) Int. Cl.: C08G 65/12, C10M 145/24, C10M 169/04, C10N 20/04, C10N 40/02, C10N 40/04, C10N 40/06, C10N 40/25, C10N 40/30

(54) **POLYETHER COMPOUND, VISCOSITY INDEX IMPROVER, LUBRICATING OIL COMPOSITION, AND PRODUCTION METHODS THEREFOR**

(30) Priority: 16.09.2015 JP 2015183238
(71) Applicant: Idemitsu Kosan Co., Ltd, Tokyo 100-8321 (JP)
(72) Inventor: NAKANO, Taeko, Sodegaura-shi Chiba 299-0293 (JP); KISEN, Tadashi, Sodegaura-shi Chiba 299-0293 (JP); OKAMOTO, Makoto, Sodegaura-shi Chiba 299-0293 (JP)
(74) Representative: Hoffmann Eitle
(86) International application number: PCT/JP2016/077060
(87) International publication number: WO 2017/047620

(57) **Abstract**

In the method for producing a polyether compound of the present invention, an oxirane monomer is polymerized with a trialkylaluminum and a non-halogen-containing onium salt to produce a polyether compound.

## Description

### Technical Field

The present invention relates to a method for producing a polyether compound, such as a polyalkylene glycol compound, by using an onium salt, a polyether compound, and a viscosity index improver and a lubricating oil composition each containing a polyether compound.

### Background Art

A polyether compound, such as a polyalkylene glycol compound (which may be hereinafter referred to as PAG), has been widely used as a raw material for a polyurethane product, such as an elastomer, an adhesive, and a sealant, and a functional oil agent. PAG is produced, for example, through addition polymerization of an oxirane monomer, such as ethylene oxide and propylene oxide, to an initiator having an active hydrogen atom, such as various alcohols.

The catalyst used for producing PAG is generally an alkali metal alkoxide catalyst, a composite metal cyanide complex catalyst, and the like (see, for example, PTL 1). However, in the case where these catalysts are used, an unsaturated alcohol is formed through side reaction, and the alcohol functions as an initiator, resulting in that it is generally difficult to produce PAG having a high molecular weight.

Under the circumstances, it has been investigated to increase the molecular weight of the polyether compound, such as PAG, by various methods. For example, PTL 2 describes that for providing PAG having a high molecular weight through reaction within a short period of time, an oxirane is polymerized in the presence of an alkali metal alkoxide catalyst and an aluminum organyl, and in the polymerization, a crown ether and a cryptand are not used in combination.

PTL 3 describes a method using a trialkylaluminum and an onium salt initiator, for providing a polymer containing an oxirane monomer unit having both a high molecular weight and a narrow molecular weight distribution.

### Citation List

### Patent Literatures

PTL 1: Japanese Patent No. 2,946,580
PTL 2: JP 2007-533783 A
PTL 3: Japanese Patent No. 5,561,351

### Summary of Invention

### Technical Problem

In recent years, a polyether compound, such as PAG, is being demanded to have a higher molecular weight in various fields. For example, in the field of lubricating oils, it has been considered to use PAG as a viscosity index improver, and one having a higher molecular weight is demanded for further enhancing the viscosity index. However, PTL 2 describes only PAG having a molecular weight of less than 70,000, and a further enhancement of the high molecular weight is demanded for providing a high performance viscosity index improver.

In PTL 3, a high molecular weight compound having a molecular weight of approximately 100,000 is produced, and in this case, a halogen-containing compound is used as an onium salt initiator, and a high molecular weight compound having a halogen at least at a molecular end thereof is produced. PAG containing a halogen atom discharged to the environment affects the ecosystem for a prolonged period of time, and thus is being avoided from being used.

The present invention has been made in view of the aforementioned problems, and an object of the present invention is to produce a polyether compound, such as PAG, having a high molecular weight while the polymerization initiation end thereof contains no halogen.

### Solution to Problem

As a result of earnest investigations made by the present inventors, it has been found that a polyether compound having a high molecular weight having a polymerization initiation end containing no halogen atom can be obtained by polymerizing an oxirane monomer with a trialkylaluminum and a non-halogen-containing onium salt, so as to produce a polyether compound, such as PAG, and thus the present invention shown below has been completed.
(1) A method for producing a polyether compound, including polymerizing an oxirane monomer with a trialkylaluminum and a non-halogen-containing onium salt to produce a polyether compound.
(2) A method for producing a lubricating oil composition, including blending a polyether compound that is obtained by the production method according to the item (1), with a lubricant base oil.
(3) A polyether compound, which is represented by the following formula (2) and has a weight average molecular weight of 80,000 or more and 10,000,000 or less:

   R¹[-O-(R³O)ₘ-R⁴]ₙ (2)

   wherein R¹ represents a linear or branched saturated hydrocarbon group having 1 to 6 carbon atoms and 1 to 4 bonding sites; R³O represents a constitutional unit derived from an oxirane monomer; m represents a value providing a weight average molecular weight of 80,000 or more and 10,000,000 or less; R⁴ each independently represent a hydrogen atom, a hydrocarbon group having 1 to 10 carbon atoms, or an oxygen-containing hydrocarbon group having 1 to 10 carbon atoms; and n represents an integer of 1 to 4.
(4) A lubricating oil composition containing the polyether compound according to the item (3) and a lubricant base oil.
(5) A viscosity index improver containing the polyether compound according to the item (3).

### Advantageous Effects of Invention

A polyether compound having a high molecular weight can be provided while the polymerization initiation end thereof contains no halogen.

### Description of Embodiments

The present invention will be described with reference to embodiments.

### Method for producing Polyether Compound

The method for producing a polyether compound according to one embodiment of the present invention is a method for producing a polyether compound by polymerizing an oxirane monomer with a trialkylaluminum and a non-halogen-containing onium salt.

### Non-halogen-containing Onium Salt

The non-halogen-containing onium salt is a salt containing no halogen atom in an onium salt. The non-halogen-containing onium salt functions as a polymerization initiator in the polymerization reaction in the production method. In the production method, the onium salt functioning as a polymerization initiator contains no halogen atom, and thus the resulting polyether compound contains no halogen atom at the polymerization initiation end thereof.

Examples of the non-halogen-containing onium salt include an ammonium salt, and preferred examples thereof include a compound represented by the following formula (1).

R¹(-O-)ₙ(NR²₄⁺)ₙ (1)

In the formula (1), R¹ represents a linear or branched saturated hydrocarbon group having 1 to 6 carbon atoms and 1 to 4 bonding sites; R² represents a linear or branched alkyl group having 4 to 8 carbon atoms; and n represents an integer of 1 to 4.

In the compound represented by the formula (1), it is preferred that n is an integer of 1 to 2, and R¹ has 1 to 2 bonding sites, and it is more preferred that n is 1, and R¹ is a linear or branched alkyl group having 1 to 6 carbon atoms.

The number of carbon atoms of R¹ is preferably from 1 to 5, and more preferably from 1 to 4. The number of carbon atoms of R² is preferably from 4 to 6, and more preferably 4.

In the case where the onium salt represented by the formula (1) is used, the resulting polyether compound has R¹(-O-)ₙ as the polymerization initiation end.

Specific examples of R¹ include a linear or branched alkyl group, such as a methyl group, an ethyl group, a n-propyl group, an isopropyl group, a n-butyl group, an isobutyl group, and a tert-butyl group; and a linear or branched saturated hydrocarbon group having 2 to 4 bonding sites, examples of which include an ethylene group, a propylene group, and a residual group obtained by removing a hydroxy group from a polyhydric alcohol, such as neopentyl glycol, trimethylolpropane, and pentaerythritol.

Specific examples of R² include a linear or branched butyl group and a linear or branched octyl group.

The amount of the non-halogen-containing onium salt used may be changed depending on the target molecular weight, and is preferably 0.005% by mol or more and 1.5% by mol or less, more preferably 0.01% by mol or more and 0.1% by mol or less, further preferably 0.01% by mol or more and 0.06% by mol or less, and particularly preferably 0.01% by mol or more and 0.03% by mol or less based on the total monomer amount in the reaction system. When the amount of the non-halogen-containing onium salt used is the lower limit or more, the polymerization reaction can be appropriately performed with the non-halogen-containing onium salt as an initiator. When the amount thereof used is the upper limit or less, the resulting polyether compound has a sufficiently high molecular weight.

The non-halogen-containing onium salt is synthesized, for example, by reacting an alkali metal alkoxide and a quaternary ammonium salt.

An alkali metal alkoxide can be obtained by alkoxylating an alcohol with a hydride of an alkali metal. The alkyl group of the alcohol used may vary depending on the number of carbon atoms of R¹, and an alcohol having 1 to 6 carbon atoms may be used. The alkyl group may have a linear structure or a branched structure.

The alcohol used may be a monohydric to tetrahydric alcohol, and specific examples thereof include methanol, ethanol, propanol, 2-propanol, butanol, isobutyl alcohol, tert-butyl alcohol, ethylene glycol, propylene glycol, neopentyl glycol, trimethylolpropane, and pentaerythritol.

Examples of the quaternary ammonium salt include tetrabutylammonium chloride, tetrabutylammonium bromide, tetraoctylammonium chloride, and tetraoctylammonium bromide.

### Trialkylaluminum

Specific examples of the trialkylaluminum include a trialkylaluminum having an alkyl group having 1 to 18 carbon atoms, and therein, a trialkylaluminum having an alkyl group having 1 to 8 carbon atoms is preferred, and a trialkylaluminum having an alkyl group having 2 to 6 carbon atoms is more preferred.

The alkyl group contained in the trialkylaluminum may be branched or linear. The alkyl groups contained in one molecule may be the same as or different from each other.

Specific examples of the trialkylaluminum include trimethylaluminum, triethylaluminum, tri-n-butylaluminum, and triisobutylaluminum, and among these, triisobutylaluminum is preferred.

The trialkylaluminum may be used alone, or two or more kinds thereof may be used in combination.

The trialkylaluminum used may be diluted with a solvent, such as hexane and toluene.

In the production of a polyether compound, the trialkylaluminum is preferably 1 or more and 100 or less, more preferably 5 or more and 50 or less, and further preferably 11 or more and 40 or less, in terms of molar ratio with respect to the non-halogen-containing onium salt.

In the production method, when the trialkylaluminum is in the range, a polyether compound having a high molecular weight can be produced.

### Oxirane Monomer

The oxirane monomer is a compound having a three-membered heterocyclic ring formed of two carbon atoms and one oxygen atom. The oxirane monomer used preferably contains no halogen atom in the molecule. With the oxirane monomer having no halogen atom, a polyether compound containing no halogen atom in the molecule can be produced in cooperation with the non-halogen-containing onium salt as the polymerization initiator.

Specific examples of the oxirane monomer include a chain alkylene oxide, an alicyclic epoxide, an alkyl glycidyl ether, and an aromatic epoxide.

The chain alkylene oxide has a hydrocarbon moiety that is branched or linear, and specific examples thereof include a chain alkylene oxide having 2 to 20 carbon atoms, such as ethylene oxide, propylene oxide, 1,2-epoxybutane, 1,2-epoxyisobutane, 2,3-epoxybutane, 1,2-epoxyhexane, 1,2-epoxyoctane, 1,2-epoxydecane, 1,2-epoxytetradecane, 1,2-epoxyhexadecane, 1,2-epoxyoctadecane, and 1,2-epoxyeicosane.

Examples of the alicyclic epoxide include an alicyclic epoxide having 5 to 12 carbon atoms, such as 1,2-epoxycyclopentane, 1,2-epoxycyclohexane, and 1,2-epoxycyclododecane.

Examples of the alkyl glycidyl ether include methyl glycidyl ether, ethyl glycidyl ether, and butyl glycidyl ether, and examples of the aromatic epoxide include styrene oxide and phenyl glycidyl ether.

These compounds may be used alone, or two or more kinds thereof may be used in combination.

In the compounds shown above, a chain alkylene oxide is preferred. The chain alkylene oxide used preferably has 2 to 12 carbon atoms, and more preferably 2 to 4 carbon atoms. The chain alkylene oxide is preferably ethylene oxide, propylene oxide, 1,2-epoxybutane, 1,2-epoxyisobutane, or 2,3-epoxybutane, and more preferably ethylene oxide, propylene oxide, or 1,2-epoxybutane.

With the use of the chain alkylene oxide having 2 to 4 carbon atoms, the polyether compound has a structure that is similar to PAG, which has been ordinarily used, and thus can be favorably used in various fields. For example, in the field of lubricating oils, the polyether compound is favorably used as a viscosity index improver.

The polyether compound may be synthesized through ring-opening polymerization of the oxirane monomer in the presence of the trialkylaluminum and the non-halogen-containing onium salt. The polymerization reaction is generally performed by mixing these raw materials in a reaction system. The raw materials may be mixed, for example, in such a manner that the oxirane monomer is added to the non-halogen-containing onium salt having been charged in the reaction system, and then the trialkylaluminum is further added thereto. In alternative, the raw materials may be mixed in such a manner that the oxirane monomer is added to a mixture of the trialkylaluminum and the non-halogen-containing onium salt having been charged in the reaction system.

The polymerization reaction is preferably performed in the presence of a solvent while it is not particularly limited. By performing the polymerization reaction in the presence of a solvent, the polymerization can be easily controlled to facilitate the production of the polyether compound having a high molecular weight.

The solvent is not particularly limited as far as the solvent is inert to the raw materials, and examples thereof include a hydrocarbon solvent, such as hexane, cyclohexane, octane, isooctane, and toluene, and an ether solvent, such as a monoether, a diether, a triether, a tetraether, polyvinyl ether, and a polyalkylene glycol compound.

Examples of the monoether include a dialkyl ether having an alkyl group having 1 to 12 carbon atoms. The diether used may be a dialkyl diether having an alkyl group having 1 to 12 carbon atoms, and examples thereof include a dialkyl ether of an alkanediol, such as ethylene glycol, propylene glycol, 1,3-propanediol, 1,4-butanediol, and neopentyl glycol. Examples of the triether and the tetraether include an alkyl ether of a trihydric or tetrahydric alcohol, such as glycerin, trimethylolethane, trimethylolpropane, and pentaerythritol.

These compounds may be used alone, or two or more kinds thereof may be used in combination.

The solvent is generally added to the reaction system to make a concentration of the total monomer (i.e., a molar amount of the monomer per 1 L of the solvent) of 0.1 mol/L or more and 10 mol/L or less, preferably 1 mol/L or more and 8 mol/L or less, and further preferably 1 mol/L or more and 4 mol/L or less. When the concentration of the monomer is the upper limit or less, the polyether compound having a high molecular weight can be easily produced. When the concentration of the monomer is the lower limit or more, the size of the reaction vessel can be prevented from becoming unnecessarily large.

The condition for performing the polymerization reaction is not particularly limited, and may be appropriately determined depending on the kinds of the raw materials, the target molecular weight, and the like. The pressure in the polymerization reaction is generally the atmospheric pressure. The temperature in the polymerization is generally from -30 to 30°C, preferably from -20 to 10°C, and more preferably from -15 to 0°C. The polymerization time is generally from 0.5 to 24 hours, preferably from 1 to 15 hours, and more preferably from 2 to 10 hours.

The polymerization reaction may be terminated through deactivation of the catalyst by adding, for example, water, an alcohol, an acidic substance, a mixture thereof, or the like. After completing the polymerization reaction, the polymer may be recovered by removing impurities and volatile components by an ordinary method, such as filtering or distillation under reduced pressure.

The resulting polymer has a hydroxy group as the end thereof, and a functional group may be introduced to the end hydroxy group with a modifier. Specifically, a hydrocarbon group having 1 to 10 carbon atoms, an oxygen-containing hydrocarbon group having 1 to 10 carbon atoms, or the like may be introduced to the end of the polymer through esterification, etherification, or the like of the hydroxy group. Examples of the hydrocarbon group include an alkyl group, and examples of the oxygen-containing hydrocarbon group include an acyl group. The details of the hydrocarbon group and the oxygen-containing hydrocarbon group are the same as R⁴ described later.

In the production method, a polyether compound having a high molecular weight can be produced. Specifically, a polyether compound having a weight average molecular weight of 10,000 or more can be produced. A polyether compound that has a weight average molecular weight of 10,000 or more is useful in various fields, and for example, in the field of lubricating oils, can be usefully used as a viscosity index improver for enhancing a viscosity index.

A polyether compound having a weight average molecular weight of 80,000 or more can be produced, and further a polyether compound having an extremely high molecular weight, such as a polyether compound having a weight average molecular weight of 150,000 or more, can also be produced.

The upper limit of the weight average molecular weight of the resulting polyether compound is not particularly limited, and is generally 10,000,000 or less, and preferably 3,000,000 or less, from the standpoint of the handleability and the easiness in production.

### Polyether Compound

The polyether compound according to one embodiment of the present invention is a compound represented by the following formula (2) having a weight average molecular weight of 80,000 or more and 10,000,000 or less.

R¹[-O(R³O)ₘ-R⁴]ₙ (2)

In the formula (2), R¹ and n are the same as above; R³O represents a constitutional unit derived from an oxirane monomer; m represents a value providing a weight average molecular weight of 80,000 or more and 10,000,000 or less; and R⁴ each independently represent a hydrogen atom, a hydrocarbon group having 1 to 10 carbon atoms, or an oxygen-containing hydrocarbon group having 1 to 10 carbon atoms.

The polyether compound having the molecular structure shown by the formula (2) having a high molecular weight of 80,000 or more has been difficult to produce, but can be produced by the aforementioned production method according the embodiment of the present invention.

The polyether compound having the molecular structure shown by the formula (2) having a high weight average molecular weight of 80,000 or more has various characteristics derived from the high molecular weight thereof. For example, a polyether compound having a high molecular weight can enhance the viscosity index of a lubricating oil composition by blending in the lubricating oil composition, and with the molecular weight of 80,000 or more thereof, the viscosity index can be further increased.

The weight average molecular weight of the polyether compound is preferably 150,000 or more, and more preferably 200,000 or more. By extremely increasing the molecular weight, the polyether compound can easily exhibit the various characteristics due to the high molecular weight. For example, in the case where the polyether compound is used as a viscosity index improver, the viscosity index can be further increased.

The polyether compound having a weight average molecular weight exceeding 10,000,000 may be inferior in production and handleability in some cases. The weight average molecular weight of the polyether compound is preferably 3,000,000 or less from the standpoint of the production and the handleability.

The specific compound of the oxirane monomer in the formula (2) has been described above. Specific examples of R³ in the formula (2) include a divalent hydrocarbon group having 2 to 20 carbon atoms and a divalent hydrocarbon group having 2 to 20 carbon atoms having an oxygen atom. The compound may be used alone, or two or more kinds thereof may be used in combination, in one molecule.

The oxirane monomer is preferably a chain alkylene oxide as described above. Accordingly, in the formula (2), R³O is preferably a group having a structure of -CR⁵₂CR⁵₂O- (wherein R⁵ each independently represent a hydrogen atom or an alkyl group) and having a total number of carbon atoms of 2 to 20, more preferably a total number of carbon atoms of 2 to 12, and further preferably a total number of carbon atoms of 2 to 4.

More preferred specific examples of R³O include -CH₂CH₂O-, -CH₂CH(CH₃)O-, -CH₂CH(CH₂CH₃)O-, -CH₂C(CH₃)₂O-, and -CH(CH₃)CH(CH₃)O-, and among these, -CH₂CH₂O-, -CH₂CH(CH₃)O-, and -CH₂CH(CH₂CH₃)O- are particularly preferred. With the number of carbon atoms of R³O of 2 to 4, the polyether compound can be easily favorably used in various fields as described above, and for example, in the field of lubricating oils, the polyether compound is favorably used as a viscosity index improver.

The hydrocarbon group having 1 to 10 carbon atoms for R⁴ may be any of linear, branched, and cyclic. The hydrocarbon group is preferably an alkyl group, and specific examples thereof include a methyl group, an ethyl group, a n-propyl group, an isopropyl group, a branched or linear butyl group, a branched or linear pentyl group, a branched or linear hexyl group, a branched or linear heptyl group, a branched or linear octyl group, a branched or linear nonyl group, a branched or linear decyl group, a cyclopentyl group, and a cyclohexyl group.

Examples of the oxygen-containing hydrocarbon group having 1 to 10 carbon atoms for R⁴ include an acyl group having 2 to 10 carbon atoms, a chain aliphatic group having an ether bond, and an alicyclic group having an ether bond (such as a tetrahydrofurfuryl group). The hydrocarbon moiety of the acyl group having 2 to 10 carbon atoms may be any of linear, branched, and cyclic. The hydrocarbon moiety of the acyl group is preferably an alkyl group, and specific examples thereof include the alkyl groups capable of being selected as R⁴ that has 1 to 9 carbon atoms.

Among the aforementioned groups, R⁴ is preferably a hydrogen atom or an alkyl group, and more preferably a hydrogen atom or an alkyl group having 1 to 4 carbon atoms.

In the case where plural groups of R⁴ are present in one molecule, the plural groups of R⁴ in each of the molecules may be the same as or different from each other.

### Lubricating Oil Composition

The lubricating oil composition according to one embodiment of the present invention contains a lubricant base oil and the aforementioned polyether compound. The lubricating oil composition contains the polyether compound having a high molecular weight, and thus has an enhanced viscosity index as described above.

In the lubricating oil composition, the polyether compound is generally contained in an amount of 0.01% by mass or more and 50% by mass or less, preferably 0.1% by mass or more and 30% by mass or less, and more preferably 0.1% by mass or more and 15% by mass or less.

While the lubricant base oil is not particularly limited and may be any of base oils that have been generally used for a lubricating oil, examples thereof include a mineral oil, a synthetic oil, and a mixture thereof, and among these, an oxygen-containing base oil is preferred. Examples of the oxygen-containing base oil include an aliphatic monoester, an aliphatic diester, an aliphatic triester, a polyol ester (POE), an aliphatic monoether, an aliphatic diether, an aliphatic triether, an aliphatic tetraether, and an aliphatic polyvinyl ether (PVE).

The lubricant base oil generally has a kinetic viscosity at 100°C in a range of 0.5 mm²/s or more and 50 mm²/s or less, and preferably in a range of 1 mm²/s or more and 25 mm²/s or less, while it is not limited. The kinetic viscosity herein is a value that is measured with a glass capillary viscometer according to JIS K2283-2000.

The lubricating oil composition may contain additives, such as an antioxidant, an oily agent, an extreme pressure agent, a detergent dispersant, a viscosity index improver other than the aforementioned polyether compound, a rust inhibitor, a metal deactivator, and an anti-foaming agent in such a range that does not impair the effect of t polyether compound. The additives may be used alone, or two or more kinds thereof may be used in combination.

The lubricating oil composition may be formed only of the lubricant base oil and the polyether compound without blending an additive other than the polyether compound depending on purposes. The lubricating oil composition may also be formed of the lubricant base oil, the polyether compound, and at least one selected from the aforementioned additives.

The lubricating oil composition is preferably used as a refrigerant oil. Specifically, the lubricating oil composition may be used by charging in an interior of a refrigerator along with a refrigerant, and used, for example, for lubricating a sliding portion of a compressor or the like provided in the refrigerator.

In addition to the refrigerator, the lubricating oil composition may also be used in an internal-combustion engine, such as a gasoline engine and a diesel engine, a transmission system, a shock absorber, various gear systems, various bearing systems, other various industrial devices, and the like.

The lubricating oil composition may be produced by blending the polyether compound and the various additives that are used depending on necessity with the lubricant base oil.

### Viscosity Index Improver

The polyether compound may be used as an additive for enhancing a viscosity index of a lubricating oil composition as described above. The viscosity index improver may be formed only of the polyether compound, and may contain another component in addition to the polyether compound. For example, the viscosity index improver may contain a base oil or the like for diluting the polyether compound in addition to the polyether compound. The base oil used may be the various base oils described above for the lubricant base oil.

The polyether compound can be used in various purposes other than the purpose of a lubricating oil, and can be used as a raw material for a polymer material, such as urethane, constituting an elastomer, a resin, rubber, and the like. The urethane may be used, for example, as a sealant, an adhesive, and the like.

### Examples

The present invention will be described more specifically with reference to examples below, but the present invention is not limited to the examples.

The measurement of the properties was performed according to the following procedures.

### Weight Average Molecular Weight (Mw) and Number Average Molecular Weight (Mn)

The weight average molecular weight (Mw) and the number average molecular weight (Mn) were measured with gel permeation chromatography (GPC). In the GPC, the measurement was performed by using two columns of TSKgel Super Multipore HZ-M, produced by Tosoh Corporation, and tetrahydrofuran as an eluent with a refractive index detector as a detector, and the weight average molecular weight (Mw) and the number average molecular weight (Mn) were obtained with the standard polystyrene.

### Synthesis Non-halogen-containing Onium Salt

In a 50-mL recovery flask, 1.8 g of sodium hydride and 20 mL of cyclohexane were charged. 6 mL of 2-propanol was added dropwise thereto, and the mixture was stirred at room temperature. Thereafter, the solvent was distilled off with an evaporator to synthesize sodium isopropoxide. In a 100-mL three-neck flask, 2 g of the resulting sodium isopropoxide, 20 mL of dichloromethane, and 6 g of tetrabutylammonium chloride were charged, and stirred for 4 hours. The precipitate was filtered, and then the solvent was distilled off with an evaporator, thereby providing a non-halogen-containing onium salt represented by the following chemical formula.

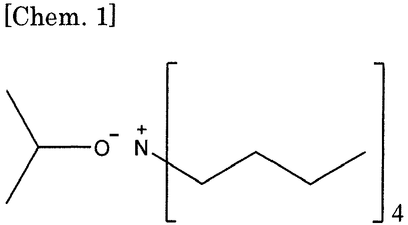

### Example 1

In a 1-L separable flask, 0.25 g of the aforementioned non-halogen-containing onium salt as a polymerization initiator, 250 mL of cyclohexane as a solvent, and 100 mL (83 g) of propylene oxide (PO) as a monomer were charged. After cooling the reaction system to -15°C, 7.5 mL of a 1.0 M toluene solution of triisobutylaluminum was added dropwise thereto. After completing the dropwise addition, the reaction mixture was stirred under atmospheric pressure for 2 hours, and 10 mL of a mixed solution of ethanol and hydrochloric acid (5/1 by mass) was added to complete the reaction. The resulting crude product was filtered under pressure, and the volatile component was distilled off under reduced pressure at 120°C to provide 76 g of the target compound. The target compound was a polyether compound represented by the formula (2), wherein R¹ is an isopropyl group, R³ is a propylene group, R⁴ is a hydrogen atom, n is 1, and m is a number corresponding to the weight average molecular weight.

### Example 2

73 g of a target compound was provided in the same manner as in Example 1 except that 0.12 g of the non-halogen-containing onium salt was used instead of 0.25 g thereof.

### Example 3

75 g of a target compound was provided in the same manner as in Example 2 except that a 2-L separable flask and 500 mL of cyclohexane as a solvent were used instead of the 1-L separable flask and 250 mL of cyclohexane as a solvent.

### Comparative Example 1

0.74 g of sodium methoxide as a polymerization initiator and 10 mL of toluene as a solvent were charged in a 200-mL autoclave, which was then sealed. Thereafter, 40 mL of propylene oxide as a monomer was charged therein, and the mixture was heated to 135°C and stirred. After confirming the decrease of the pressure, 56 mL of propylene oxide was charged therein at 1 mL/min. After completing the charge, the reaction was performed until the pressure reached 0.5 kg/cm³. After completing the reaction, an ion exchange resin was added to the resulting crude product, and the mixture was stirred. The ion exchange resin was removed by filtration, and the volatile component was distilled off under reduced pressure at 120°C.

**Table 1**

| | Monomer (PO) | | Onium salt | | | Trialkylaluminum | | Concentration | Polyether compound | | |
|---|---|---|---|---|---|---|---|---|---|---|---|
| | ml | mol | g | mmol | % by mol | mmol | molar ratio | mol/L | Mw (× 10⁴) | Mn (× 10⁴) | Mw/Mn |
| Example 1 | 100 | 1.43 | 0.25 | 0.83 | 0.058 | 7.5 | 9.0 | 5.5 | 8.87 | 3.51 | 2.53 |
| Example 2 | 100 | 1.43 | 0.12 | 0.40 | 0.028 | 7.5 | 18.8 | 5.5 | 22.88 | 14.15 | 1.62 |
| Example 3 | 100 | 1.43 | 0.12 | 0.40 | 0.028 | 7.5 | 18.8 | 2.8 | 30.07 | 13.97 | 2.15 |
| Comparative Example 1 | 96 | 1.37 | - | - | - | - | - | - | 0.36 | 0.28 | 1.29 |

| | | | | | | | | | | | |
|---|---|---|---|---|---|---|---|---|---|---|---|
| *1 The percentage by mol for the onium salt shows a percentage by mol with respect to the monomer. *2 The molar ratio of the trialkylaluminum shows a molar ratio with respect to the onium salt. *3 The concentration shows a molar amount with respect to 1 L of the solvent (cyclohexane + toluene). | | | | | | | | | | | |

As described above, in Examples 1 to 3, the polyether compound having a high molecular weight was produced by performing the polymerization reaction in the presence of the trialkylaluminum and the non-halogen-containing onium salt. In Comparative Example 1, on the other hand, a polyether compound having an increased molecular weight was not obtained since a trialkylaluminum and a non-halogen-containing onium salt were not used.

### Industrial Applicability

The polyether compound according to the embodiment is blended in a lubricating oil composition used in a refrigerator, an internal-combustion engine, a gear system, a bearing system, a transmission system, a shock absorber, and the like, and used, for example, as a viscosity index improver. The polyether compound can also be used as a raw material for urethane constituting an adhesive, a sealant, and the like.

## Claims

1. A method for producing a polyether compound, comprising polymerizing an oxirane monomer with a trialkylaluminum and a non-halogen-containing onium salt to produce a polyether compound.

2. The method for producing a polyether compound according to claim 1, wherein the non-halogen-containing onium salt is a compound represented by the following formula (1):
R¹(-O-)ₙ(NR²₄⁺)ₙ (1)
wherein R¹ represents a linear or branched saturated hydrocarbon group having 1 to 6 carbon atoms and 1 to 4 bonding sites; R² represents a linear or branched alkyl group having 4 to 8 carbon atoms; and n represents an integer of 1 to 4.

3. The method for producing a polyether compound according to claim 2, wherein in the formula (1), n represents 1, and R¹ represents a linear or branched alkyl group having 1 to 6 carbon atoms.

4. The method for producing a polyether compound according to any one of claims 1 to 3, wherein the polyether compound has a weight average molecular weight of 10,000 or more and 10,000,000 or less.

5. The method for producing a polyether compound according to any one of claims 1 to 4, wherein the oxirane monomer is at least one selected from a chain alkylene oxide having 2 to 4 carbon atoms.

6. A method for producing a lubricating oil composition, comprising blending a polyether compound that is obtained by the method according to any one of claims 1 to 5, with a lubricant base oil.

7. A polyether compound, which is represented by the following formula (2) and has a weight average molecular weight of 80,000 or more and 10,000,000 or less:
R¹[-O-(R³O)ₘ-R⁴]ₙ (2)
wherein R¹ represents a linear or branched saturated hydrocarbon group having 1 to 6 carbon atoms and 1 to 4 bonding sites; R³O represents a constitutional unit derived from an oxirane monomer; m represents a value providing a weight average molecular weight of 80,000 or more and 10,000,000 or less; R⁴ each independently represent a hydrogen atom, a hydrocarbon group having 1 to 10 carbon atoms, or an oxygen-containing hydrocarbon group having 1 to 10 carbon atoms; and n represents an integer of 1 to 4.

8. A lubricating oil composition comprising the polyether compound according to claim 7 and a lubricant base oil.

9. A viscosity index improver comprising the polyether compound according to claim 7.
